# EUROPEAN PATENT SPECIFICATION

(11) **EP 0 727 572 B1**
(45) Date of publication and mention of the grant of the patent: **02.06.1999**
(21) Application number: 96102294.4
(22) Date of filing: 15.02.1996
(51) Int. Cl.: F02B 31/08

(54) **Method for charging a multiple valve internal combustion engine and internal combustion engine**
Verfahren zum Laden einer Brennkraftmaschine mit mehreren Ventilen und Brennkraftmaschine zur Durchführung dieses Verfahrens
Procédé pour alimenter un moteur à combustion interne à plusieurs soupapes et moteur à combustion interne mettant en oeuvre ce procédé

(30) Priority: 15.02.1995 JP 51739/95
(43) Date of publication of application: 21.08.1996
(73) Proprietor: YAMAHA HATSUDOKI KABUSHIKI KAISHA, Iwata-shi Shizuoka-ken, 438 (JP)
(72) Inventor: Tsuzuku, Hiroyuki, Iwata-shi, Shizuoka-ken (JP); Tsuchida, Naoki, Iwata-shi, Shizuoka-ken (JP); Ito, Takeshi, Iwata-shi, Shizuoka-ken (JP)
(74) Representative: Grünecker, Kinkeldey, Stockmair & Schwanhäusser Anwaltssozietät

(56) References cited:
- EP-A- 0 054 964
- EP-A- 0 483 109
- EP-A- 0 611 883
- DE-A- 3 828 742
- DE-A- 4 108 469
- DE-A- 4 233 640
- US-A- 4 615 309
- US-A- 4 667 636
- US-A- 5 329 912

## Description

This invention relates to a method for charging a multiple valve internal combustion engine comprising a cylinder block defining at least one cylinder, defined by a cylinder bore, and a cylinder head connected to the cylinder block, said cylinder slidably accommodating a piston defining a combustion chamber with the cylinder and the cylinder head, said cylinder head supporting a spark plug projecting into the combustion chamber, an intake system and an exhaust system for each cylinder, said intake system having an intake passage branching into a plurality of branch passages leading to intake valve controlled intake ports, and an exhaust gas recirculation means for introducing exhaust gas into the intake system, the method comprising the steps of creating at least under low load/low speed conditions, an air/fuel mixture predominantly in at least one of the branch passages oriented towards a spark plug ignition area of the combustion chamber, and constructed so as to lend a tumble motion to the air/fuel mixture which is introduced into the combustion chamber close to a spark plug position so that a primary flow area of the tumbling flow of the air/fuel mixture is directed toward the spark plug ignition area, introducing exhaust gas in at least one of the further branch passages comprising an exhaust gas introduction opening downstream of an air intake control valve, as well as to an internal combustion engine for performing the method of claim 1, said engine comprising a cylinder block defining at least one cylinder, defined by a cylinder bore, and a cylinder head connected to the cylinder block, said cylinder slidably accommodating a piston defining a combustion chamber with the cylinder and the cylinder head, said cylinder head supporting a spark plug projecting into the combustion chamber, an intake system and an exhaust system for each cylinder, said intake system having an intake passage branching into a plurality of branch passages leading to intake valve controlled intake ports, and an exhaust gas recirculation means for introducing exhaust gas into the intake system, wherein means are provided for creating, at least under low load/low speed conditions, an air/fuel mixture predominantly in at least one of the branch passages, said at least one of the branch passages being oriented towards a spark plug ignition area of the combustion chamber and being constructed so as to lend a tumble motion to the air/fuel mixture in the combustion chamber so that a primary flow area of the tumbling flow of the air/fuel mixture is directed toward the spark plug ignition area (46) while at least one of the further branch passages comprises an exhaust gas introduction opening downstream of an air intake control valve.

Such a method as well as internal combustion engine are known from document US-A-5,329,912.

However, when operating at low loads and/or low speeds the closing of the air-intake control valve creates a negative pressure in two of said three branch passages to a high level, thereby increasing the amount of exhaust gases supplied through exhaust gas recirculation device to said branch passages. Therefore, it is not possible to supply an appropriate amount of exhaust gases to the combustion chamber.

Conventionally, a piston was slidably inserted into a cylinder bore inside the cylinder and the combustion chamber occupied the space bounded by the foregoing cylinder and piston. In addition to the presence of an air intake passage connecting this combustion chamber to outside the cylinder, there was an exhaust passage that connected the foregoing combustion chamber to the outside. The foregoing air intake passage was structured to form a plurality of branch passages on the combustion chamber side, and fuel was primarily supplied to one of those branch passages, while the other branch passages were connected by an exhaust gas recirculation passage to the foregoing exhaust passage. In addition, a spark plug ignition area bordered the foregoing combustion chamber.

When the above described engine was operating, then, during the intake stroke, a negative pressure would be generated in the combustion chamber due to the descent of the piston, and air from the outside would be drawn into the cylinder through the various branch passages of the air intake passage that were directed into this combustion chamber. At this time, fuel that was primarily supplied to one of those branch passages wouid generate an air/fuel mixture with the air passing through. Next, this air/fuel mixture, along with the air flowing through the other branch passage(s) would be fed into the combustion chamber, with combination of the air/fuel mixture and the air.

Next, when the compression stroke commenced with the rise of the piston following its descent, and in the following power stroke, the spark discharge in the foregoing ignition area ignited the air/fuel mixture after the foregoing confluence, burning it to push the piston downward again and to convert this motion into drive-power.

Next, the gases produced by the foregoing combustion, are caused to pass through the foregoing exhaust passage with the exhaust stroke of the rising piston, which expells them from the cylinder. After that, the above described intake, and other strokes are repeated.

In addition, during the foregoing intake stroke, a part of the exhaust gases in the exhaust passage flow into the foregoing other branch passage(s) through an exhaust gas recirculation passage, whereupon they are mixed with air. This feature causes some exhaust gas to be mixed with the air/fuel mixture after the confluence of flows inside the combustion chamber. In other words, an inactive component is intermixed, and this feature inhibits the creation of NOₓ gases during combustion to achieve cleaner exhaust gases.

However, especially during low-load operations, only a small amount of fuel is supplied, and after the confluence inside the combustion chamber, the air/fuel ratio (A/F) is high (the fuel concentration is leaner), and consequently the above described intra mixture of the exhaust gases into the aforementioned air/fuel mixture can cause degraded ignition properties, thereby resulting in delays in the generation of a flame nucleus and in the propagation of the flame, dramatically lowering engine performance.

Accordingly, it is an objective of the present invention to provide an improved method as indicated above which always ensures the supply of an appropriate amount of exhaust gas to the combustion chamber.

According to the present invention, this objective is solved in terms for a method as indicated above in that said air intake control valve for opening or closing said branch passages comprises a valve body for each of said branch passages, and that independent of positions of said valve bodies always a certain amount of air and air/fuel mixture is supplied to the combustion chamber.

In addition, it is an objective of the present invention to provide an improved internal combustion engine as indicated above which is capable to always ensure the supply of an appropriate amount of exhaust gas to the combustion chamber.

According to the present invention, this objective in terms of an internal combustion engine is solved in that said air intake control valve for opening or closing said branch passages comprises a valve body for each of said branch passages and that all valve bodies are provided with a notch.

According to one embodiment of the invention, one of said branch passages directs the air/fuel mixture along an axis which passes close to or intersects a longitudinal axis of a cylinder in order to enhance the ignition of the air/fuel mixture in the ignition area of the spark plug.

In order to enhance the tumbling flow, it is advantageous when a backside of said intake port of said one or center branch passage into said combustion chamber is closer to the inside circumferential surface of the cylinder bore of said cylinder than intake ports of the remaining branch passages.

Further, it is possible to enhance the intermixing of the air/fuel mixture as well as the exhaust gases in a cylinder head comprising two exhaust ports and three air intake ports when the area of each exhaust port is larger than the area of each of said air intake ports, whereas according to a further preferred embodiment the area of each exhaust port is larger than the area of each of said two air intake ports adjacent to said exhaust ports, and that the area of the remaining air intake port is smaller than that of said two air intake ports.

The engine performance is further enhanced when the air intake control valve is controllable by an electronic engine control unit which also may be capable of controlling a valve provided within said exhaust gas recirculation means.

Other preferred embodiments of the present invention are laid down in further dependent claims.

Tne action delivered by the above described configuration is as follows.

When the engine is running at low loads, the amount of fuel supplied to the combustion chamber is diminished and the air/fuel ratio increases, however, the foregoing fuel is not supplied to the entire air intake passage, rather, it is supplied only to one of the branch passages from among the branches of the foregoing air intake passage. As a result, the air/fuel mixture that is drawn into the combustion chamber through the foregoing one of the branch passages evinces adequate concentration. In addition, since this air/fuel mixture generates a tumbling flow the main part of which is directed toward the ignition area the high concentration mixture arriving at the ignition area is readily ignited, and the flame nucleus is immediately generated and quickly propagated.

In the following, the present invention is explained in greater detail with respect to one embodiment thereof in conjunction with accompanying drawings, wherein:
Figure 1 is a top sectional view of this embodiment;
Figure 2 shows a sectional view of this embodiment taken along arrow 2-2 of Figure 1;
Figure 3 illustrates a sectional view of this embodiment taken along arrow 3-3 of Figure 1;
Figure 4 is a graph showing the relationship between throttle aperture, and the flow of air, air/fuel mixture, and exhaust gases for this embodiment;
Figure 5 is an illustration corresponding to Figure 1 for another embodiment, not covered by the claims;
Figure 6 shows a sectional view taken along arrow 6-6 of Figure 5;
Figure 7 is a drawing corresponding to Figure 6 for a further embodiment, not covered by the claims; and
Figure 8 is a graph showing the relationship between the crank angle and the aperture of the intake and exhaust valves.

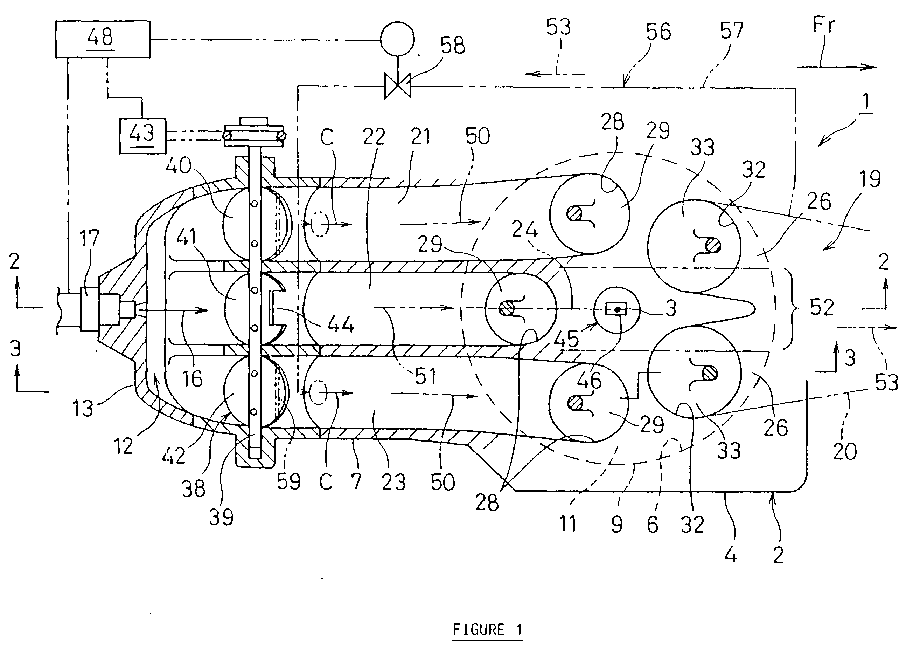

One embodiment of this invention will be described below with reference to the Figures 1 to 4.

An embodiment is shown by Figures 1 through 4.

Reference number 1 in Figures 1 through 3 refers to an internal combustion engine. To facilitate the discussion, the arrow in the Figures labeled Fr points toward the front, and references to left and right shall be based on that reference in the horizontal direction.

Tne foregoing engine 1 is equipped with a crankcase that supports a crankshaft on bearings, and a cylinder 2 which projects upward from this crankcase. This cylinder 2 comprises a cylinder unit 4 with a vertical axis 3 and a cylinder bore 6 formed in the foregoing cylinder unit 4 centered on the same axis 3. A cylinder head 7 is attached to the protruding top end of the foregoing cylinder unit 4, and a cylinder head cover 8 covers the top surface side of this cylinder head 7.

A piston 9 has been inserted, free to slide up and down along the foregoing axis 3 in the foregoing cylinder bore 6, and a connecting rod links the foregoing piston 9 to the above mentioned crankshaft. The space encompassed by the foregoing cylinder unit 4, cylinder head 7 and piston 9 on the cylinder head 7 side comprises the combustion chamber 11.

An air intake passage 12 connects the foregoing combustion chamber 11 with the outside of the foregoing cylinder 2. The downstream side of this air intake passage 12 is formed in the back of the foregoing cylinder head 7 and extends in the forward direction. Also, the upstream side of the same air intake passage 12 is formed to connect to the inside of an air intake pipe on the back surface side of the foregoing cylinder head 7. A throttle valve 14 is present inside this air intake pipe 13 and opens and closes the air intake passage 12; further, the foregoing air intake pipe 13 is connected on the upstream end of the air intake passage 12 to the outside air through an air cleaner. Further, a fuel injection valve 17, which is the fuel supply means to supply fuel 16 to the inside of the downstream side of the air intake passage, 12 is located downstream of the foregoing throttle valve 14.

Additionally an exhaust passage 19 connects the foregoing combustion chamber 11 to the outside. The upstream side of this exhaust passage 19 is formed in the front of the foregoing cylinder head 7 and extends in the fore-aft direction. The downstream side of the same exhaust passage 19 is formed by an exhaust pipe 20 that connects to the front surface of the foregoing cylinder head 7. The downstream end of this exhaust pipe 20 opens into the atmosphere by way of a muffler, etc.

The foregoing air intake passage 12 branches left and right toward the combustion chamber into a plurality (three) of branches at the end on the combustion chamber 11 side of the passage, thereby comprising a first through third branch 21-23. Tnese first through third branches 21-23, when viewed along the foregoing axis 3 (from the top), extend approximately linearly fore and aft and the branch passages 21-23 run approximately parallel to each other.

As is shown in the top view of Figure 1, from among the foregoing branch passages 21-23, one of the branch passages, the second branch passage 22 evinces a passage axis 24 which, when extended through the combustion chamber 11, passes close to the foregoing axis 3 or intersects it. Also, the other branch passages, the first branch passage 21 and the third branch passage 23, are on the left and right sides of the foregoing second branch passage 22.

One of the above branch passages, the second branch passage 22, is supplied with fuel 16 by the above mentioned fuel injection valve 17.

In this embodiment, the areas of said exhaust ports 32 are larger than the areas of said intake ports adjacent said exhaust ports 32. In this case, an enhanced flow characteristic is achievable by providing the intake port 28 connected to said center branch passage 22 with a smaller area than the remaining intake ports 28.

On the other hand, the above mentioned exhaust passage 19, extending toward the combustion chamber 11, branches left and right into a plurality (two) of branches on the combustion chamber side of the passage to form a pair of exhaust branch passages 26.

The foregoing first through third branch passages 21-23 open into the rear of the foregoing combustion chamber 11 on their downstream ends, and these openings comprise the air intake openings 28. There are air intake valves 29 located in the respective air intake openings 28 which can open and close them. These air intake valves are held normally closed over the air intake openings 28 by means of springs 30.

The dynamic valve mechanism 35 is housed in the space encompassed by the foregoing cylinder head 7 and the cylinder head cover 8. This dynamic valve system 35 includes an air intake camshaft 36 and an exhaust camshaft that are driven by the aforementioned crankshaft, and the cams on the air intake camshaft 36 and exhaust camshaft engage the air intake valves 29 and exhaust valves 33. This cam engagement, along with the force generated by the springs 30, allows the foregoing air intake valves 29 to be appropriately opened and closed over the air intake openings 28, and the exhaust valves 33 to be appropriately opened and closed over the exhaust openings.

An air intake control valve 38 opens and closes the first through third branch passages 21-23 of the foregoing air intake passage 12. This air intake control valve 38, arranged downstream of said throttle 14, is composed of a valve shaft 39 which extends left and right transversely across the foregoing first through third branch passages 21-23, and of first through third valve bodies 40-42 which are attached to the valve shaft 39 and which open and close the first through third air intake passages 21-23. The foregoing air intake control valve 38 is driven by an actuator 43 that includes a servo motor. In other words, the operation of this actuator 43 makes it possible to adjust the aperture of the foregoing first through third branch passages 21-23 by means of the foregoing first through third valve bodies 40-42. A notch 44 is formed in the foregoing second valve body 41, so that even when the first through third branch passages 21-23 are fully closed, the notch 44 in the second branch passage 22 allows some degree of opening in that passage, so that this center branch passage 22 is always supplyable with fuel 16 regardless of the positions of said valve bodies 40-42.

A spark plug 45 is attached in the foregoing cylinder head 7, so that the electrical ignition area 46 of that spark plug borders the combustion chamber 11 in the vicinity of the foregoing axis 3.

The foregoing fuel injection valve 17, actuator, and spark plug 45 are electrically connected to and controllable by an electronic engine control unit 48.

When the engine 1 is operating, and the piston 9 is descending in its intake stroke from the upper dead point to the lower dead point, the opening of the air intake valves causes each of the air intake openings 28 to be opened. Thereupon the negative pressure in the combustion chamber 11 and in the air intake passage 12 causes air 50 to be drawn into cylinder 2 from the outside.

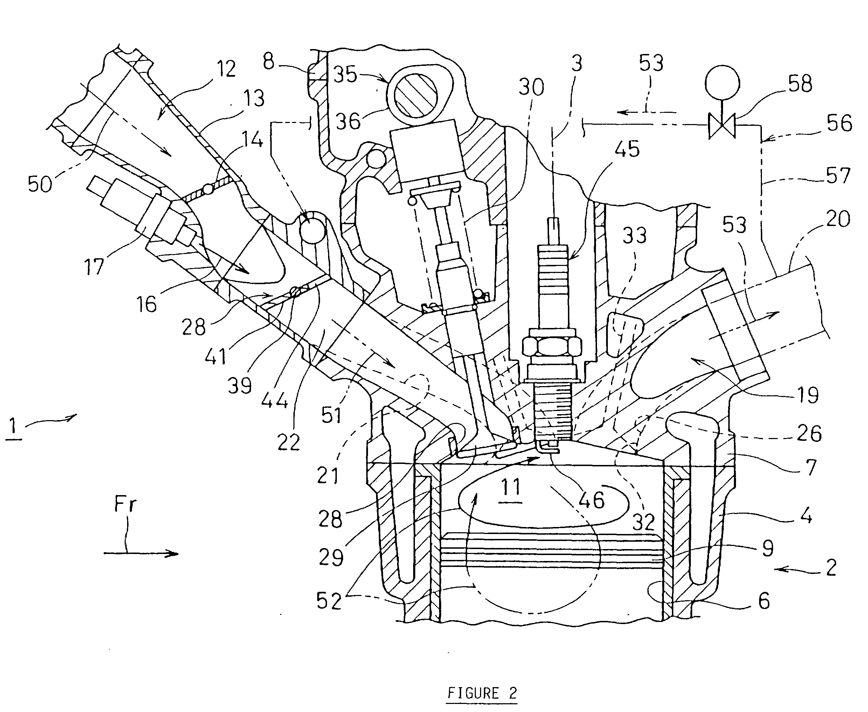

At this time, preferably, based upon control from the engine control unit 48, the fuel injection valve 17 operates to inject fuel 16 into the air 50 in second branch passage 22 of the air intake passage 12 to generate an air/fuel mixture 51. Next, this air fuel mixture 51, along with the air 50 from the first and third branch passages 21, 23 of the same air intake passage 12, is drawn into the foregoing combustion chamber 11 where there is confluence between the air/fuel mixture 51 and the air 50. In this case, the air/fuel mixture 51 drawn into the combustion chamber 11 from the second branch passage 22 to create a tumbling flow 52 (that swirls around an axis in the left-right direction), and the main part of this tumbling flow 52 (shown by the double-dot line in Figure 2), in other words, that part with the highest concentration of fuel 16, which is flowing at the highest speed, is directed toward the foregoing electrical ignition area 46 inside the foregoing combustion chamber 11.

More specifically, from among the three air intake openings 28 of the first through third branch passages 21-23 that are arrayed left and right in parallel, more of the air/fuel mixture 51 flows through the air intake opening 28 for the second branch passage than it does through the air intake openings 28 of the first and third branch passages 21, 23 to enter the combustion chamber 11. Also, the back side of the center air intake opening 28 in this embodiment

is closer to the inside circumferential surface of the cylinder bore 6 than are those of the left and right air intake openings 28, and consequently most of the air/fuel mixture 51 that flows through the foregoing center air intake opening 28 flows closer to the front side than to the back side of this air intake opening 28. On that account then and as described above, the air/fuel mixture 51 that flows into the combustion chamber 11 through the air intake opening 28 of the second branch passage becomes a tumbling flow 52.

Next, after the piston 9 descends as described above to reach the lower dead point, it begins to ascend in the compression stroke. When the piston 9 is close to the upper dead point, the main part of the foregoing tumbling flow 52 is compressed inside the combustion chamber (shown by the solid line in Figure 2) and reaches the foregoing discharge area 46.

At this time, the control of the foregoing engine control unit causes the spark plug 45 to discharge in the ignition area 46, igniting the air fuel mixture 51 in the foregoing tumbling flow 52 and burning it in the combustion stroke. This feature causes the piston 9 to descend anew and convert the energy into drive-power delivered by the crankshaft.

Two exhaust gases 53 are created by the foregoing combustion by the exhaust stroke from the continuing ascent of the said piston 9, implemented by the opening operation of the exhaust valves 33, and are expelled through the exhaust opening 32 and through the exhaust passage 19 to the outside of the cylinder 2.

Thereafter the foregoing intake and other strokes are repeated to deliver drive-power from the engine 1.

The foregoing engine 1 is equipped with an exhaust gas recirculation apparatus 56 to supply a part of the exhaust gases 53 to the air/fuel mixture 51 when it is operating.

The above mentioned exhaust gas recirculation apparatus 56 is equipped with an exhaust gas recirculation passage 57 which links the foregoing exhaust passage 19 to the inside of the foregoing first branch passage 21 and third branch passage 23. A magnetic valve 58 is mounted in this exhaust gas recirculation passage 57 to open or close it. This valve 58 is connected electronically to the aforementioned engine control unit 48.

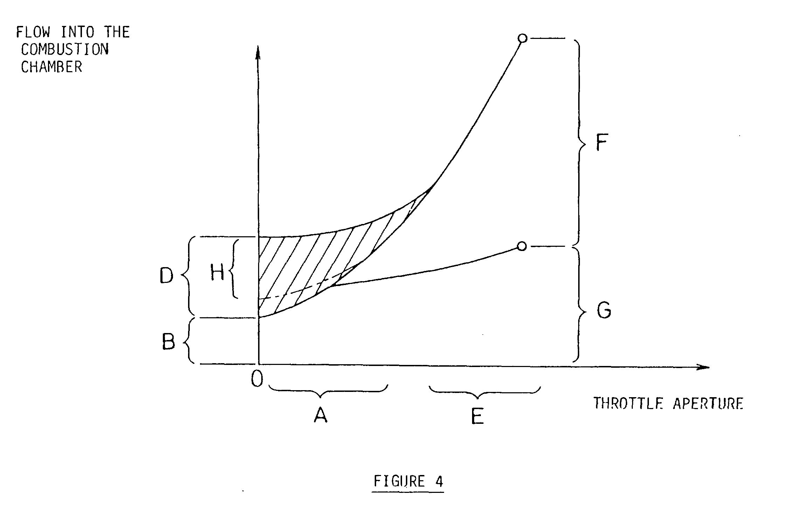

In Figures 1 through 4, when the engine 1 is operating at low loads, both the throttle aperture of the throttle valve 14 and the aperture of the air intake valve 38 are small (shown by the solid lines in Figures 1 through 3 and by the area A in Figure 4). As a result, an overall reduced amount of air 50 flows through the air intake passage 12.

In the above described instance, air 50 does flow through the notch 44 formed in the second valve body 41 of the air intake control valve in the second branch passage 22, and the fuel 16 supplied into it generates an air/fuel mixture 51 which is drawn into the combustion chamber 11 (Figure 4, area B).

During these low-load operating periods of the foregoing engine 1, a reduced amount of fuel 16 is supplied to the combustion chamber and the air/fuel ratio value is high, however, the foregoing fuel 16 is not being supplied to the inside of the entire air intake passage 12, but just to the second branch passage 22 from among the foregoing branch passages 21-23 of the air intake passage 12. As a result, the air/fuel mixture that passes through the foregoing second branch passage 22 and is drawn into the combustion chamber 11 evinces adequate concentration. Since this air/fuel mixture 51 generates a tumbling flow 52, the main part of which is directed toward the ignition area 46, it reaches this ignition area at high concentration, thereby assuring the ignition of the foregoing air/fuel mixture 51 and immediately creating a flame nucleus which rapidly propagates.

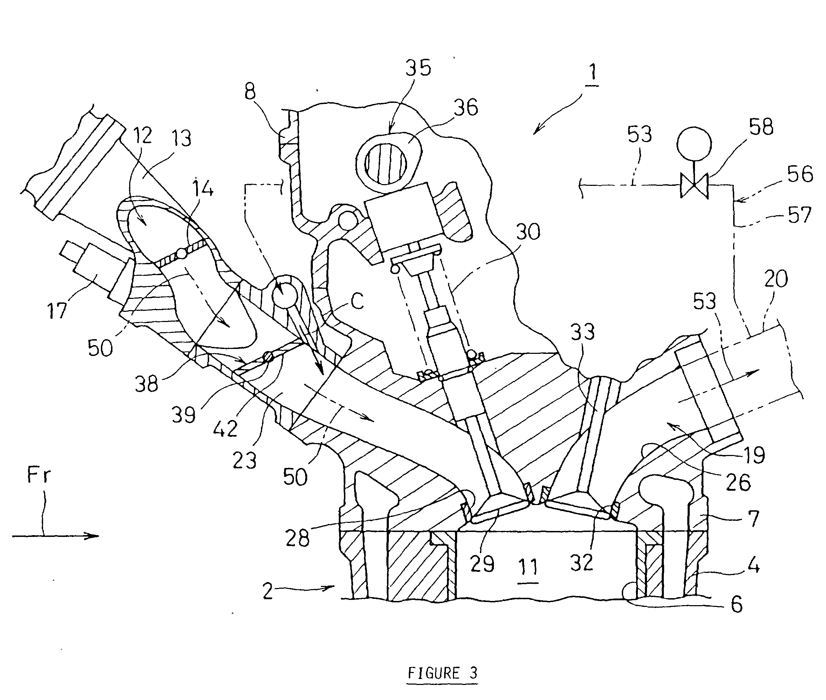

Further, when operating under the above described low load conditions, the throttle valve 14 and the first and third valve bodies 40, 42 are closed, hence only a minute amount of air 50 flows through the first and third branch passages 21, 23. On the other hand, as was described above, because the first and third valves 40, 42 are closed, the negative intake pressure downstream of them in the first and third branch passages 21, 23 increases, and this negative pressure causes a part of the exhaust gas 53 in the exhaust passage 19 to pass through the foregoing exhaust gas recirculation passage 57 into the foregoing first and third branch passages 21, 23, from where it is drawn into the combustion chamber 11 (arrow C in Figures 1, 3; cross-hatched area D in Figure 4), and this feature inhibits NOₓ emissions.

when the engine 1 is operating at high loads, the throttle apertures of the throttle valve 14 and the aperture of the air intake control valve 38 are larger (area E in Figure 4). As a result more air flows through the first and third branch passages 21, 23 to the combustion chamber 11 (area F in Figure 4), and moreover, more air/fuel mixture 51 flows into the combustion chamber through the second branch passage 22 (area G in Figure 4). Also at this time, control exercised by the engine control unit 48 causes the fuel injection valve 17 to inject more fuel 16 as well.

Also during the aforementioned high load operations, as described above, the throttle aperture of the throttle valve 14 and the aperture of the air intake control valve 38 are larger so that the negative pressure inside the first through third branch passage 21-23 decreases, and consequently the amount of exhaust gases 53 that pass through the exhaust gas recirculation passage 57 from the exhaust passage decreases. In other words, during periods of high output, because of lesser NOₓ generation, the amount of the exhaust gas 53 supply into the foregoing air intake passage 12 is reduced as described above.

As is shown by the double-dot line in Figure 1, notches (59) are also provided into the first and third valve bodies 40, 42. By so doing, even when the air intake valve 38 tries to fully close the air intake passage 12, some aperture is retained in each of the branch passages 21-23 of the air intake passage 12 to allow some air 50 to flow through these branch passages 21-23.

Thus, when operating at low loads, the closing of the air intake control valve 38, even if it attempts to fully close the air intake passage 12, prevents the negative pressure in the first branch passage 21 and the third branch passage 23 from reaching too high of a level, thereby reducing the amount of exhaust gases 53 supplied through the exhaust gas recirculation device 56 to the first and third branch passages 21, 23. In other words, a reduced amount of exhaust gas flows into the combustion chamber 11 (shown by the double-dot line in Figure 4 and area H in Figure 4). In sum, by making the above described notches 59, it is possible to supply the appropriate amount of exhaust gases 53 to the combustion chamber 11.

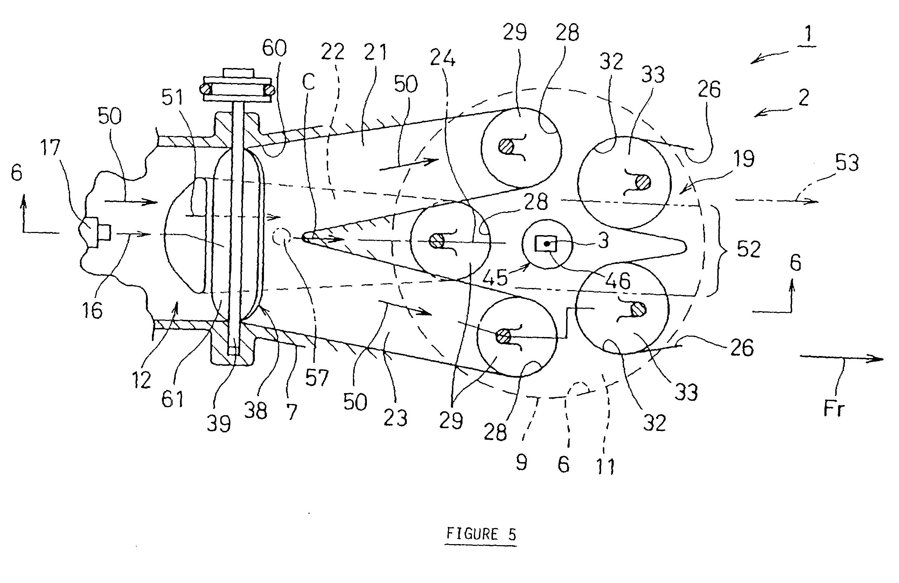

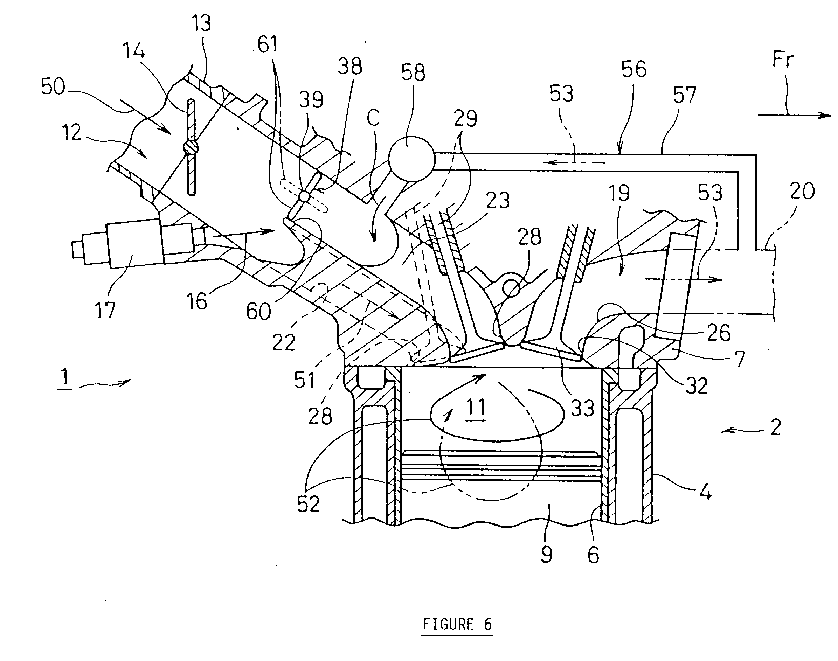

Figures 5 and 6 show another embodiment not covered by the claims.

In this embodiment, the first branch passage 21 and the third branch passage 23 are preferably arrayed in parallel above the second branch passage 22. The upstream ends of the foregoing first branch passage 21 and the third branch passage 23 merge into a confluence area 60, and the valve body 61 of the air intake valve 38 opens and closes this confluence area 60. With this arrangement, it is possible for a five valve internal combustion engine to use air intake ports 28 all having the same area, however,smaller than the respective areas of said exhaust ports 32.

The fuel injection valve 17 injects fuel directed toward the second branch passage 22, in other words, most of the fuel 16 is supplied to this second branch passage.

Further, the exhaust gases 53 from the exhaust gas recirculation device 56 are supplied to the confluence area 60, and from there to the first and third branch passages 21, 23.

The other structures and the action are similar to those for the inventive embodiment described above. The parts common to the embodiments in the Figures bear the same reference numbers so that additional explanation of them will be omitted.

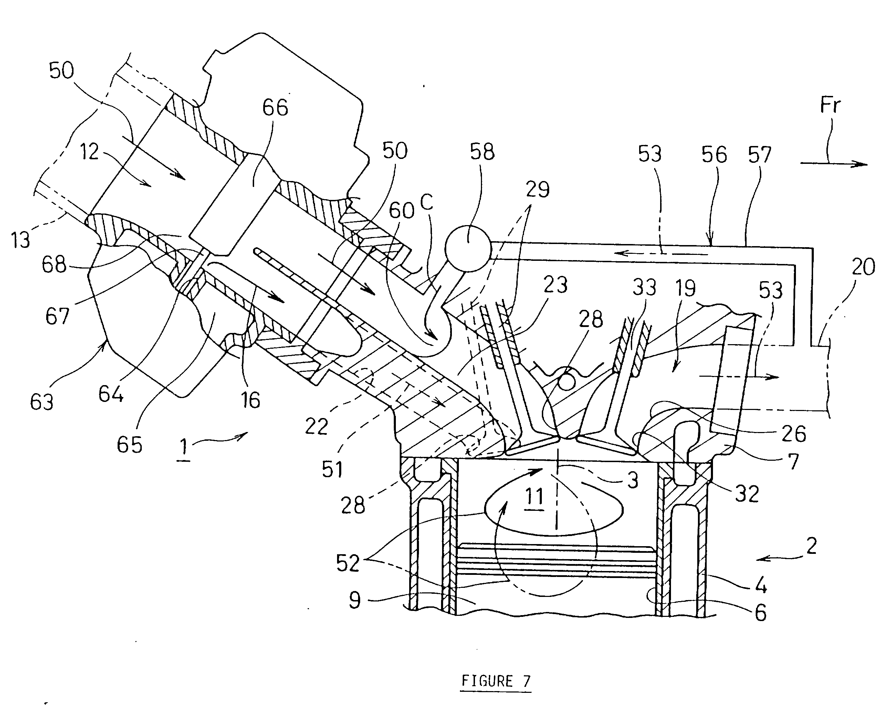

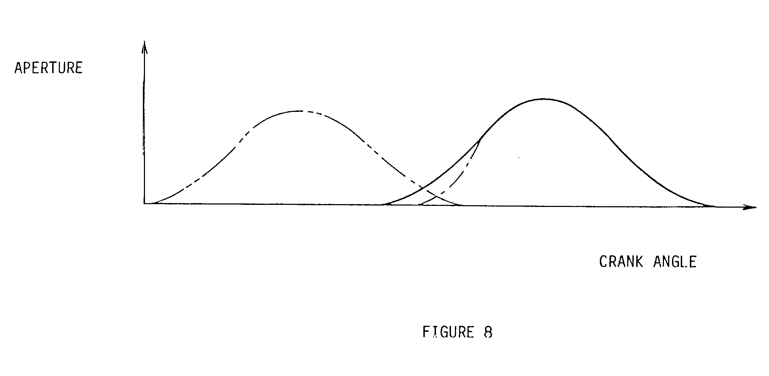

A further embodiment not covered by the claims is shown in Figures 7 and 8.

In this further embodiment, instead of the fuel injection valve shown for other non-inventive embodiment, a carburetor 63 is used as the fuel supply means.

A main nozzle 64 is formed in the foregoing carburetor 63 and opens into the air intake passage 12. This main nozzle 64 is connected to a float chamber 65 which stores the fuel 16. A constriction valve 66 is present in the foregoing carburetor 63 and is free to advance and recede in the direction of the air intake passage 12. A needle valve 67 projects at the end of this constriction valve 66 in a manner such that it inserts into the foregoing main nozzle 64. There is also a venturi area 68 which lies between the inside circumferential surface of the air intake passage of the foregoing carburetor and the projecting end of the foregoing constriction valve 66.

The operation of the constriction valve 66 by the operator or driver adjusts the aperture of the foregoing venturi area, and the joint movement of the needle valve adjusts the aperture of the foregoing main nozzle 64. Then, when fuel 16 is drawn inside the air intake passage 12 from the main nozzle 64, said fuel 16 is supplied to the inside of that air intake passage 12.

In the above described instance, the main nozzle is observed to point more toward the second branch passage 22 than to the confluence area 60 of the first branch passage 21 and third branch passage 23. As a result, the primary supply of fuel is to the second branch passage 22.

In Figure 8, the double-dotted line shows the open and closed positions of the exhaust valve 33; the solid lines show the open and closed positions of the air intake valve 29 with regard to the first and third branch passages 21, 23; and the single-dot line shows the open and closed positions for the air intake valve 29 with respect to the second branch passage 22.

According to this structure, the opening of the air intake valve 29 for the second air intake passage 22 is delayed in relation to the opening of the air intake valve 29 for the first and third branch passages 21, 23. As a result more exhaust gas 53 is supplied by the exhaust gas recirculation apparatus to the air intake passage 12, and during low-load operations, NOₓ emissions can be more effectively reduced thereby.

The structure that is shown in Figure 8 may equally well be applied to the foregoing first inventive or second non-inventive embodiments.

The other structures and operations are identical to those of the foregoing non-inventive embodiment, and common parts in the Figures bear the same reference numbers so that further explanation will be omitted.

As explained above the combustion chamber side of the air intake passage is branched into a plurality of branches, and fuel is supplied primarily to one of the foregoing branch passages, while the other branch passages comprise an exhaust gas recirculation passage that connects them to the exhaust passage, and a spark plug is mounted so that its discharge area borders on the combustion chamber, a tumbling flow being generated in the combustion chamber by the air/fuel mixture passing through the above mentioned one branch passage, and the main part of this tumbling flow is directed to the foregoing discharge area in the foregoing combustion chamber. The following effects derive from this structure.

To wit, during low-load operations for the foregoing engine, there is but little fuel supplied to the combustion chamber and the air/fuel ratio is larger, however the fuel is not supplied to the entirety of the foregoing air intake passage, rather, it is supplied to one of the branch passages of the foregoing air intake passage. As a result, an adequately concentrated air/fuel mixture is drawn into the combustion chamber from the foregoing one branch passage. In addition, this air/fuel mixture evinces tumbling flow and its main part is directed toward the discharge area, so that there is a high concentration air/fuel mixture reaching the discharge area to ensure ready ignition, the immediate generation of a flame nucleus, and its rapid propagation.

As a result, during low-load operations, the air/fuel ratio is high, and it is possible to obtain good ignition, rapid propagation of flame, and improved engine performance even when a part of the exhaust gases is being supplied to the combustion chamber.

## Claims

1. Method for charging a multiple valve internal combustion engine (1) comprising a cylinder block defining at least one cylinder (2), defined by a cylinder bore (6), and a cylinder head (7) connected to the cylinder block, said cylinder (2) slidably accommodating a piston (9) defining a combustion chamber (11) with the cylinder (2) and the cylinder head (7), said cylinder head (7) supporting a spark plug (45) projecting into the combustion chamber (11), an intake system and an exhaust system for each cylinder (2), said intake system having an intake passage (12) branching into a plurality of branch passages (21,22,23) leading to intake valve controlled intake ports (28), and an exhaust gas recirculation means (56) for introducing exhaust gas (53) into the intake system, the method comprising the steps of:
creating at least under low load/low speed conditions, an air/fuel mixture (51) predominantly in at least one (22) of the branch passages (21,22,23) oriented towards a spark plug ignition area (46) of the combustion chamber (11), and
constructed so as to lend a tumble motion to the air/fuel mixture (51) which is introduced into the combustion chamber (11) close to a spark plug position so that a primary flow area of the tumbling flow of the air/fuel mixture (51) is directed toward the spark plug ignition area (46), introducing exhaust gas in at least one of the further branch passages (21,23) comprising an exhaust gas introduction opening (C) downstream of an air intake control valve (38),
**characterized in that**
said air intake control valve (38) for opening or closing said branch passages (21,22,23) comprises a valve body (40,41,42) for each of said branch passages (21,22,23), and that independent of positions of said valve bodies (40,41,42) always a certain amount of air and air/fuel mixture (51) is supplied to the combustion chamber (11).

2. Method according to claim 1, **characterized in that** said one branch passage (22) directs the air/fuel mixture (51) along an axis (24) which passes close to or intersects a longitudinal axis (3) of said cylinder (2), whereas exhaust gas is directed into at least one of the remaining branch passages (21,23).

3. Method according to claim 1 or 2, **characterized in that** said air intake control valve (38) is controlled by an electronic engine control unit (48).

4. Method according to at least one of claims 1 to 3, **characterized in that** the exhaust gas flow (53) through an exhaust gas recirculation means (56) is controlled by a valve (58) which in turn is controlled by an electronic engine control unit (48).

5. Method according to at least one of claims 1 to 4, characterized in that the intake valve operating the intake opening (28) of said one branch passage (22) supplied with fuel opens later than the remaining intake valves.

6. Internal combustion engine (1) for performing the method of claim 1, said engine comprising a cylinder block defining at least one cylinder (2), defined by a cylinder bore (6), and a cylinder head (7) connected to the cylinder block, said cylinder (2) slidably accommodating a piston (9) defining a combustion chamber (11) with the cylinder (2) and the cylinder head (7), said cylinder head (7) supporting a spark plug (45) projecting into the combustion chamber (11), an intake system and an exhaust system for each cylinder (2), said intake system having an intake passage (12) branching into a plurality of branch passages (21,22,23) leading to intake valve controlled intake ports (28), and an exhaust gas recirculation means (56) for introducing exhaust gas (53) into the intake system, wherein means are provided for creating, at least under low load/low speed conditions, an air/fuel mixture (51) predominantly in at least one (22) of the branch passages (21,22,23), said at least one (22) of the branch passages (21,22,23) being oriented towards a spark plug ignition area (46) of the combustion chamber (11) and being constructed so as to lend a tumble motion to the air/fuel mixture (51) in the combustion chamber (11) so that a primary flow area of the tumbling flow of the air/fuel mixture (51) is directed toward the spark plug ignition area (46) while at least one of the further branch passages (21,23) comprises an exhaust gas introduction opening (C) downstream of an air intake control valve (38),
**characterized in that**
said air intake control valve (38) for opening or closing said branch passages (21,22,23) comprises a valve body (40,41,42) for each of said branch passages (21,22,23) and that all valve bodies (40,41,42) are provided with a notch (44,59).

7. Internal combustion engine according to claim 6, **characterized in that** said air intake passage (12) branches into three branch passages (21,22,23) arranged side by side, the center passage (22) of which is supplyable with fuel (16).

8. Internal combustion engine according to claim 7, **characterized in that** said center passage (22) has a longitudinal passage axis (24) passing close to or intersecting with a longitudinal axis (3) of said cylinder (2).

9. Internal combustion engine according to at least one of claims 6 to 8, **characterized in that** a part of said intake port (28) adjacent to the inside circumferential surface of said cylinder bore (6) of said one or center branch passage (22) into said combustion chamber (11) is closer to the inside circumferential surface of said cylinder bore (6) of said cylinder (2) than intake ports (28) of the remaining branch passages (21,23).

10. Internal combustion engine according to at least one of claims 6 to 9, **characterized in that** a throttle valve (14) is arranged within said air intake passage (12) upstream of said air intake control valve (38).

11. Internal combustion engine according to at least one of claims 6 to 10, **characterized in that** said cylinder head (7) comprises two exhaust ports (32) and three air intake ports (28) connected with said branch passages (21,22,23).

12. Internal combustion engine according to claim 11, **characterized in that** the area of each exhaust port (32) is larger than the area of each of said air intake ports (28).

13. Internal combustion engine according to claim 12, **characterized in that** the area of each exhaust port (32) is larger than the area of each of said two air intake ports (28) adjacent to said exhaust ports (32) and that the area of the remaining air intake port (28) is smaller than that of said two air intake ports (28).

14. Internal combustion engine according to at least one of claims 6 to 13, **characterized in that** a fuel injection valve (17) or a carburetor (63) supplies said one branch passage (22) with fuel (16).

15. Internal combustion engine according to at least one of claims 6 to 14, **characterized in that** said air intake control valve (38) is controllable by an electronic engine control unit (48).

16. Internal combustion engine according to at least one of claims 6 to 15, **characterized in that** said exhaust gas recirculation means (56) comprises a valve (58) controllable by an electronic engine control unit (48).

## Patentansprüche

1. Verfahren zum Laden einer Verbrennungskraftmaschine (1) mit mehreren Ventilen, umfassend einen Zylinderblock mit zumindest einem Zylinder (2) mit einer Zylinderbohrung (6), und einem Zylinderkopf (7), der mit dem Zylinderblock verbunden ist, wobei der Zylinder (2), der einen Kolben (9) gleitbeweglich aufnimmt, der mit dem Zylinder (2) und dem Zylinderkopf (7) eine Brennkammer (11) bildet , wobei der Zylinderkopf (7) eine Zündkerze (45) hält, die in die Brennkammer (11) hervorsteht, ein Einlaßsystem und ein Auslaßsystem für jeden Zylinder (2), wobei das Einlaßsystem einen Einlaßkanal (12) aufweist, der in eine Vielzahl von Zweigkanälen (21, 22, 23) verzweigt, die zu den von Einlaßventilen gesteuerten Einlässen (28) verlaufen, und eine Abgasrückführvorrichtung (56), zur Einführung von Abgas (53) in das Einlaßsystem, wobei das Verfahren folgende Schritte aufweist:
Erzeugen, zumindest unter Niedriglast/Niedriggeschwindigkeitsbedingungen, eines Luft/Kraftstoffgemisches (51) überwiegend in zumindest einem (22) der Zweigkanäle (21, 22, 23) in Richtung eines Zündkerzenzündbereiches (46) der Brennkammer (11) und derart konstruiert, um dem Luft/Kraftstoffgemisch (51) eine Tumbleströmung zu verleihen, das in die Brennkammer (11) in der Nähe der Zündkerzenposition eingeführt wird, so daß ein Hauptstrombereich der Tumbleströmung des Luft/Kraftstoffgemisches (41) in Richtung des Zündkerzenzündbereiches (46) gerichtet wird, Einführen von Abgas in zumindest einen der weiteren Zweigkanäle (21, 23), der eine Abgaseinführöffnung (C) stromab eines Lufteinlaßsteuerventils (38) aufweist, **dadurch gekennzeichnet**, daß das Lufteinlaßsteuerventil (38) zum Öffnen und Schließen der Zweigkanäle (21, 22, 23) einen Ventilkörper für jeden der Zweigkanäle (21, 22, 23) umfaßt, und daß unabhängig von den Positionen der Ventilkörper (40, 41, 42) stets eine bestimmte Menge von Luft und Luft/Kraftstoffgemisch (51) der Brennkammer (11) zugeführt wird.

2. Verfahren nach Anspruch 1, **dadurch gekennzeichnet**, daß der eine Zweigkanal (22) das Luft/Kraftstoffgemisch (51) entlang einer Achse (24) leitet, die nahe einer Längsachse (3) des Zylinders (2) vorbeiläuft, oder diese schneidet, wohingegen Abgas in Richtung zumindest eines der verbleibenden Zweigkanäle (21, 23) gerichtet wird.

3. Verfahren nach Anspruch 1 oder 2, **dadurch gekennzeichnet**, daß das Lufteinlaßsteuerventil (38) durch eine elektronische Motorsteuereinheit (48) gesteuert wird.

4. Verfahren nach zumindest einem der Ansprüche 1 bis 3, **dadurch gekennzeichnet**, daß der Abgasstrom (53) durch eine Abgasrückführvorrichtung (56) durch ein Ventil (58) gesteuert wird, das wiederum durch eine elektronische Motorsteuereinheit (48) gesteuert wird.

5. Verfahren nach mindestens einem der Ansprüche 1 bis 4, **dadurch gekennzeichnet**, daß das Einlaßventil, das die Einlaßöffnung (28) des einen mit Kraftstoff versorgten Zweigkanals (22) später öffnet als die verbleibenden Einlaßventile.

6. Verbrennungskraftmaschine (1) zur Durchführung des Verfahrens von Patentanspruch 1, umfassend einen Zylinderblock mit zumindest einem Zylinder (2) mit einer Zylinderbohrung (6), und einem Zylinderkopf (7), der mit dem Zylinderblock verbunden ist, wobei der Zylinder (2) einen Kolben (9) gleitbeweglich aufnimmt, der mit dem Zylinder (2) und dem Zylinderkopf (7) eine Brennkammer (11) definiert, wobei der Zylinderkopf (7) eine Zündkerze (45) hält, die in die Brennkammer (11) hervorsteht, ein Einlaßsystem und ein Auslaßsystem für jeden Zylinder (2), wobei das Einlaßsystem einen Einlaßkanal (12) aufweist, der in eine Vielzahl von Zweigkanälen (21, 22, 23) verzweigt, die zu einlaßventilgesteuerten Einlaßöffnungen (28) führen, und einer Abgasrückführvorrichtung (56) zur Einführung von Abgas (53) in das Einlaßsystem, wobei Vorrichtungen vorgesehen sind zur Erzeugung, zumindest unter Niedriglast/Niedriggeschwindigkeitsbedingungen, eines Luft/Kraftstoffgemisches (51) überwiegend in zumindest einem (22) der Zweigkanäle (21, 22, 23), wobei zumindest einer (22) der Zweigkanäle (21, 22, 23) in Richtung eines Zündkerzenzündbereichs (46) der Brennkammer (11) gerichtet ist, und derart konstruiert ist, um dem Luft/Kraftstoffgemisch (51) in der Brennkammer (11) eine Tumblebewegung zu verleihen, so daß ein Hauptstrombereich der Tumbleströmung des Luft/Kraftstoffgemisches (51) in Richtung des Zündkerzenzündbereichs (46) gerichtet ist, während zumindest einer der weiteren Zweigkanäle (21, 23) eine Abgaseinführöffnung (C) stromab eines Lufteinlaßsteuerventils (38) umfaßt, **dadurch gekennzeichnet**, daß das Lufteinlaßsteuerventil (38) zum Öffnen oder Schließen der Zweigkanäle (21, 22, 23) einen Ventilkörper (40, 41, 42) für jeden der Zweigkanäle (21, 22, 23) umfaßt, und daß alle Ventilkörper (40, 41, 42) mit einer Ausnehmung (44, 59) versehen sind.

7. Verbrennungskraftmaschine nach Anspruch 6, **dadurch gekennzeichnet**, daß der Lufteinlaßkanal (12) in drei Zweigabschnitte (21, 22, 23) verzweigt, die nebeneinander angeordnet sind, wobei der mittlere Kanal (22) mit Kraftstoff (16) versorgbar ist.

8. Verbrennungskraftmaschine nach Anspruch 7, **dadurch gekennzeichnet**, daß der mittlere Kanal (22) eine Kanalachse in Längsrichtug (24) aufweist, die nahe einer Längsachse (3) des Zylinders (2) vorbeiläuft, oder diese schneidet.

9. Verbrennungskraftmaschine nach zumindest einem der Ansprüche 6 bis 8, **dadurch gekennzeichnet**, daß ein Teil des Einlasses (28) neben der innenseitigen Umfangsfläche der Zylinderbohrung (6) des einen oder mittleren Zweigkanals (22) in die Brennkammer (11) näher zu der innenseitigen Umfangsfläche der Zylinderbohrung (6) des Zylinders (2) ist, als die Einlässe (28) der verbleibenden Zweigkanäle (21, 23).

10. Verbrennungskraftmaschine nach zumindest einem der Ansprüche 6 bis 9, **dadurch gekennzeichnet**, daß ein Drosselventil (14) in dem Lufteinlaßkanal (12) stromab des Lufteinlaßsteuerventils (38) angeordnet ist.

11. Verbrennungskraftmaschine nach zumindest einem der Ansprüche 6 bis 10, **dadurch gekennzeichnet**, daß der Zylinderkopf (2) zwei Auslässe (32) und drei Einlässe (28) aufweist, die mit den Zweigkanälen (21, 22, 23) verbunden sind.

12. Verbrennungskraftmaschine nach Anspruch 11, **dadurch gekennzeichnet**, daß der Bereich eines jeden Auslasses (32) größer ist als der Bereich eines jeden der Einlässe (28).

13. Verbrennungskraftmaschine nach Anspruch 12, **dadurch gekennzeichnet**, daß der Bereich eines jeden Auslasses (32) größer ist als der Bereich eines jeden von zwei Lufteinlässen (28) benachbart zu den Auslässen (32), und daß der Bereich des verbleibenden Einlasses (28) kleiner ist als derjenige der zwei Lufteinlässe (28).

14. Verbrennungskraftmaschine nach zumindest einem der Ansprüche 6 bis 13, **dadurch gekennzeichnet**, daß ein Kraftstoffeinspritzventil (17) oder ein Vergaser (63) den einen Zweigkanal (22) mit Kraftstoff versorgt.

15. Verbrennungskraftmaschine nach zumindest einem der Ansprüche 6 bis 14, **dadurch gekennzeichnet**, daß das Lufteinlaßsteuerventil (38) durch eine elektronische Motorsteuereinheit (48) steuerbar ist.

16. Verbrennungskraftmaschine nach zumindest einem der Ansprüche 6 bis 15, **dadurch gekennzeichnet**, daß die Abgasrückführvorrichtung (56) ein Ventil (58) aufweist, das durch eine elektronische Motorsteuereinheit (48) steuerbar ist.

## Revendications

1. Procédé d'alimentation d'un moteur à combustion interne multi-soupapes (1) comprenant un bloc-cylindres définissant au moins un cylindre (2), délimité par un alésage cylindrique (6), et une culasse (7) reliée au bloc-cylindres, ledit cylindre (2) logeant à coulissement un piston (9) délimitant une chambre de combustion (11) avec le cylindre (2) et la culasse (7), ladite culasse (7) supportant une bougie d'allumage (45) faisant saillie dans la chambre de combustion (11), un système d'admission et un système d'échappement pour chaque cylindre (2), ledit système d'admission ayant un passage d'admission (2) se ramifiant en une pluralité de passages de ramification (21, 22, 23) menant à des orifices d'admission (28) commandés par la soupape d'admission, et des moyens de recirculation de gaz d'échappement (56) pour introduire des gaz d'échappement (53) dans le système d'admission, le procédé comprenant les étapes consistant à :
créer au moins dans des conditions de faible charge/faible vitesse un mélange air/carburant (51) de façon prédominante dans au moins un premier (22) des passages de ramification (21, 22, 23) orienté vers une zone d'allumage de bougie d'allumage (46) de la chambre de combustion (11), et conçu de manière à conférer un mouvement de culbute au mélange air/carburant (51) qui est introduit dans la chambre de combustion (11) près d'une position de bougie d'allumage, afin qu'une zone d'écoulement principale de l'écoulement en culbute du mélange air/carburant (51) soit orientée vers la zone d'allumage de bougie d'allumage (46), en introduisant des gaz d'échappement dans au moins l'un des autres passages de ramification (21, 23) comprenant une ouverture d'introduction de gaz d'échappement (C) en aval d'une soupape de commande d'admission d'air (38),
caractérisé en ce que
ladite soupape de commande d'admission d'air (38) conçue pour ouvrir ou fermer lesdits passages de ramification (21, 22, 23) comprend un corps de soupape (40, 41, 42) pour chacun desdits passages de ramification (21, 22, 23), et en ce que, indépendamment des positions desdits corps de soupape (40, 41, 42), une certaine quantité d'air et de mélange d'air/carburant (51) est toujours fournie à la chambre de combustion (11).

2. Procédé selon la revendication 1, caractérisé en ce que ledit premier passage de ramification (22) oriente le mélange air/carburant (51) le long d'un passage (24) qui passe près d'un axe longitudinal (3) dudit cylindre (2) ou le coupe, tandis que les gaz d'échappement sont orientés dans au moins l'un des passages de ramification (21, 23) restants.

3. Procédé selon la revendication 1 ou 2, caractérisé en ce que ladite soupape de commande d'admission d'air (38) est commandée par une unité de commande de moteur électronique (48).

4. Procédé selon au moins l'une des revendications 1 à 3, caractérisé en ce que l'écoulement de gaz d'échappement (53), via des moyens de recirculation de gaz d'échappement (56), est commandé par une soupape (58), qui est commandée à son tour par une unité de commande de moteur électronique (48).

5. Procédé selon au moins l'une des revendications 1 à 4, caractérisé en ce que la soupape d'admission actionnant l'ouverture d'admission (28) dudit premier passage de ramification (22) alimenté en carburant s'ouvre plus tard que les soupapes d'admission restantes.

6. Moteur à combustion interne (1) pour mettre en oeuvre le procédé selon la revendication 1, ledit moteur comprenant un bloc-cylindres délimitant au moins un cylindre (2), délimité par un alésage cylindrique (6), et une culasse (7) reliée au bloc-cylindres, ledit cylindre (2) logeant à coulissement un piston (9) délimitant une chambre de combustion (11) avec le cylindre (2) et la culasse (7), ladite culasse (7) supportant une bougie d'allumage (45) faisant saillie dans la chambre de combustion (11), un système d'admission et un système d'échappement pour chaque cylindre (2), ledit système d'admission ayant un passage d'admission (12) se ramifiant en une pluralité de passages de ramification (21, 22, 23) menant à des orifices d'admission (28) commandés par une soupape d'admission, et des moyens de recirculation de gaz d'échappement (56) conçus pour introduire des gaz d'échappement (53) dans le système d'admission, dans lequel des moyens sont prévus pour créer, au moins dans des conditions de faible charge/faible vitesse, un mélange air/carburant (51) de façon prédominante dans au moins l'un (22) des passages de ramification (21, 22, 23), ledit ou lesdits premiers passages (22) parmi les passages de ramification (21, 22, 23) étant orientés vers une zone d'allumage de bougie d'allumage (46) de la chambre de combustion (11) et étant conçus de façon à conférer un mouvement de culbute au mélange air/carburant (51) dans la chambre de combustion (11), afin qu'une zone d'écoulement principale de l'écoulement de culbute du mélange air/carburant (51) soit orientée vers la zone d'allumage de bougie d'allumage (46) tandis qu'au moins l'un des autres passages de ramification (21, 23) comprend une ouverture d'introduction de gaz d'échappement (C) en aval d'une soupape de commande d'admission d'air (38),
caractérisé en ce que :
ladite soupape de commande d'admission d'air (38) conçue pour ouvrir ou fermer lesdits passages de ramification (21, 22, 23) comprend un corps de soupape (40, 41, 42) pour chacun desdits passages de ramification (21, 22, 23), et en ce que tous les corps de soupape (40, 41, 42) sont pourvus d'une entaille (44, 59).

7. Moteur à combustion interne selon la revendication 6, caractérisé en ce que ledit passage d'admission d'air (12) se ramifie en trois passages de ramification (21, 22, 23) agencés côte-à-côte parmi lesquels le passage central (22) peut être alimenté en carburant (16).

8. Moteur à combustion interne selon la revendication 7, caractérisé en ce que ledit passage central (22) présente un axe de passage longitudinal (24) passant près d'un axe longitudinal (3) dudit cylindre (2) ou le coupant.

9. Moteur à combustion interne selon au moins l'une des revendications 6 à 8, caractérisé en ce qu'une partie dudit orifice d'admission (28), adjacente à la surface circonférentielle intérieure dudit alésage cylindrique (6) dudit premier passage ou passage central de ramification (22) dans ladite chambre de combustion (11) est plus proche de la surface circonférentielle intérieure dudit alésage cylindrique (6) dudit cylindre (2) que les orifices d'admission (28) des passages de ramification (21, 23) restants.

10. Moteur à combustion interne selon au moins l'une des revendications 6 à 9, caractérisé en ce qu'une soupape d'étranglement (14) est agencée dans ledit passage d'admission d'air (12) en amont de ladite soupape de commande d'admission d'air (38).

11. Moteur à combustion interne selon au moins l'une des revendications 6 à 10, caractérisé en ce que ladite culasse (7) comprend deux orifices d'échappement (32) et trois orifices d'admission d'air (28) reliés auxdits passages de ramification (21, 22, 23).

12. Moteur à combustion interne selon la revendication 11, caractérisé en ce que l'aire de chaque orifice d'échappement (32) est plus grande que l'aire de chacun desdits orifices d'admission d'air (28) .

13. Moteur à combustion interne selon la revendication 12, caractérisé en ce que la zone de chaque orifice d'échappement (32) est plus grande que la zone de chacun desdits deux orifices d'admission d'air (28) de manière adjacents auxdits orifices d'échappement (32), et en ce que l'aire de l'orifice d'admission d'air (28) restant est plus petite que celle desdits deux orifices d'admission d'air (28) .

14. Moteur à combustion interne selon au moins l'une des revendications 6 à 13, caractérisé en ce qu'une soupape d'injection de carburant (17) ou un carburateur (63) alimente ledit passage de ramification (22) en carburant (16).

15. Moteur à combustion interne selon au moins l'une des revendications 6 à 14, caractérisé en ce que ladite soupape de commande d'admission d'air (38) peut être commandée par une unité de commande de moteur électronique (48).

16. Moteur à combustion interne selon au moins l'une des revendications 6 à 15, caractérisé en ce que lesdits moyens de recirculation de gaz d'échappement (56) comprennent une soupape (58) pouvant être commandée par une unité de commande de moteur électronique (48).
